Europäisches Patentamt

European Patent Office

Office européen des brevets

(19)

(11) Veröffentlichungsnummer: **0 311 561 B1**

(12) **EUROPÄISCHE PATENTSCHRIFT**

(45) Veröffentlichungstag der Patentschrift: **16.01.91**

(21) Anmeldenummer: **88810658.0**

(22) Anmeldetag: **26.09.88**

(51) Int. Cl.⁵: **G 01 N 21/47**, G 01 J 3/46,
G 02 B 17/08, B 41 F 33/00

(54) Messkopf.

(30) Priorität: **01.10.87 CH 3821/87**

(43) Veröffentlichungstag der Anmeldung:
**12.04.89 Patentblatt 89/15**

(45) Bekanntmachung des Hinweises auf die
Patenterteilung:
**16.01.91 Patentblatt 91/03**

(84) Benannte Vertragsstaaten:
**CH DE FR GB IT LI NL SE**

(56) Entgegenhaltungen:
**DE-A-2 600 604**
**DE-C-3 421 577**
**US-A-3 244 062**
**US-A-4 076 421**

**ELECTRO OPTICS, Nr. 6, Juni 1983, Seiten 50-54,
Chicago, Illinois, US, M.J. RIEDL: "The mangin
mirror as imaging element"**

(73) Patentinhaber: **GRETAG Aktiengesellschaft
Althardstrasse 70
CH-8105 Regensdorf (CH)**
(84) **CH DE FR GB IT LI NL**

(73) Patentinhaber: **Heidelberger Druckmaschinen
Aktiengesellschaft
Kurfürsten-Anlage 52-60 Postfach 10 29 40
D-6900 Heidelberg 1 (DE)**
(84) **SE**

(72) Erfinder: **Mast, Fred, Dr.
Fürstenlandstrasse 15
CH-9500 Wil (CH)**
Erfinder: **Knus, Jean A.
Baslerstrasse 111
CH-8048 Zürich (CH)**

(74) Vertreter: **Kleewein, Walter, Dr. et al
Patentabteilung CIBA-GEIGY AG Postfach
CH-4002 Basel (CH)**

Courier Press, Leamington Spa, England.

**Beschreibung**

Die Erfindung betrifft einen Meßkopf für ein photoelektrisches Meßgerät, insbesondere ein spektrales Remissionsmeßgerät, mit einer Lichtquelle, mit einer Beleuchtungsoptik, die bei einem vorgegebenen Abstand eine auf einer Meßebene liegende Meßfläche unter einem vorgegebenen großen Einfallswinkel anstrahlt, mit einer Meßoptik deren Objektiv das von der Meßfläche unter einem kleinen Meßwinkelbereich um das Lot auf die Meßfläche zurückgestrahlte Meßlicht auffängt und über einen Lichtwellenleiter an eine photoelektrische Wandleranordnung, insbesondere ein Spektrometer, angekoppelt ist.

Ein Meßkopf zur Bestimmung von optischen Remissionseigenschaften mit einer Projektionsoptik zur Beleuchtung der Meßfläche und mit einer einen Ringspiegel umfassenden Sammeloptik für das von der Meßfläche unter einem vorgegebenen Winkel zur optischen Achse der Projektionsoptik oder Beleuchtungsoptik remittierte Licht ist aus der DE—PS 26 00 604 bekannt.

Es ist bereits ebenfalls Stand der Technik, zur Verbesserung der Farbführungssteuerung einer Offset-Druckmaschine auf den Druckbogen vorgesehene Farbmeßfelder nicht einfach densitometrisch, sondern farbmetrisch durch spektrale Messung auszuwerten. Dabei werden für das Abstimmen der Farbe die spektralen Remissionen verwendet und daraus Farbkoordinaten errechnet, die mit entsprechenden Soll-Farbkoordinaten verglichen werden, um aus den sich dabei ergebenden Farbabständen Signale für die Steuerung der Farbführung zu bilden. Um Meßfehler und damit Farbsteuerungsfehler zu vermeiden, ist es erforderlich, die Farbortbestimmung für die mitgedruckten Farbmessfelder mit einer hohen Genauigkeit über den gesamten Wellenlängenbereich durchzuführen. Während bei Densitometern Lichtunterschiede in der Größenordnung von 2,5 % infolge von Abstandsänderungen zwischen der Beleuchtungsoptik und der Meßfläche noch tolerierbar sind, führen derartige Meßfehler bei einer Spektralanalyse zu unerwünschten Meßfehlern. Gemäß EP—A—209 860 wird versucht, dieses Problem dadurch zu beheben, daß die Lichtquelle im Fokus eines Kondensors angeordnet ist und daß die Meßfläche kleiner ist als der Kernbereich innerhalb der Bestrahlungsfläche auf der Meßebene. Dabei wird jedoch relativ viel Licht vergeudet, und außerdem ist die Genauigkeit dieser bekannten Anordnung immer noch verbesserungsfähig.

Ausgehend von diesem Stand der Technik liegt der Erfindung die Aufgabe zugrunde, einen Meßkopf der eingangs genannten Art zu schaffen, der es gestattet, eine Meßfläche unter einem großen Winkel zu beleuchten und das unter einem kleinen Winkel remittierte Licht unabhängig von den in der Praxis nie vollständig vermeidbaren, zum Beispiel durch ungleichmäßige Auflage des Druckbogens auf seiner Unterlage bedingten Abstandsänderungen für alle Farben genau zu erfassen.

Diese Aufgabe wird erfindungsgemäß dadurch gelöst, daß die Lichtquelle auf der optischen Achse einer Anordnung aus zwei parallel zur Meßebene ausgerichteten ringförmigen Mangin-Spiegeln angeordnet ist, die mit ihren konkaven Seiten zueinanderweisen und die im Abstand von den Mangin-Spiegeln angeordnete Lichtquelle durch einen koaxialen, die Farbfehler des Mangin-Spiegel korrigierenden Aplanaten hindurch auf die Meßfläche abbilden, daß die Eintrittslinse des Objektives auf der optischen Achse der Mangin-Spiegel angeordnet ist und daß sich im Brennpunkt der Eintrittslinse des Objektives eine Meßblende befindet, an die der Lichtwellenleiter angekoppelt ist.

Die Beleuchtungsoptik gestattet es, eine Meßfläche unter einem Einfallswinkel von im wesentlichen 45° ± 5° allseitig mit dem von der Lichtquelle stammenden Licht zu beaufschlagen, wobei das von der Meßfläche in die Meßoptik zurückgestrahlte Meßlicht unter einem Meßwinkel von im wesentlichen 0° ± 5° empfangen wird. Die Mangin-Spiegel-Anordnung der Beleuchtungsoptik gestattet es zusammen mit dem koaxialen Aplanaten, die Lichtquelle genau auf die Meßebene abzubilden. Da die beiden Mangin-Spiegel symmetrisch aufgebaut und angeordnet sind und mit einem Aplanaten zusammenwirken, werden die sphärische Aberration und das Koma durch Erfüllen der Sinusbedingung beseitigt. Die Farbfehler der Mangin-Spiegel-Anordnung werden durch den Aplanaten kompensiert. Es entstehen auf diese Weise in der Meßebene für jede Farbe gleich große Abbildungen der Lichtquelle, wobei Meßfehler vermieden werden, die entstehen, wenn nicht nur in der Meßebene sondern auch oberhalb und unterhalb der Meßebene Abbildungen der Lichtquelle in verschiedenen Spektralfarben vorliegen.

Die Meßoptik oder Sammeloptik erfaßt infolge der erfindungsgemäßen Anordnung und Justierung auch bei den genannten unvermeidbaren Abstandsänderungen der Meßfläche immer das in den gleichen Raumwinkel remittierte Meßlicht. Intensitätsschwankungen durch solche Abstandsänderungen werden somit weitgehend vermieden.

Zweckmäßige Ausgestaltungen und Weiterbildungen der Erfindung sind Gegenstand von Unteransprüchen.

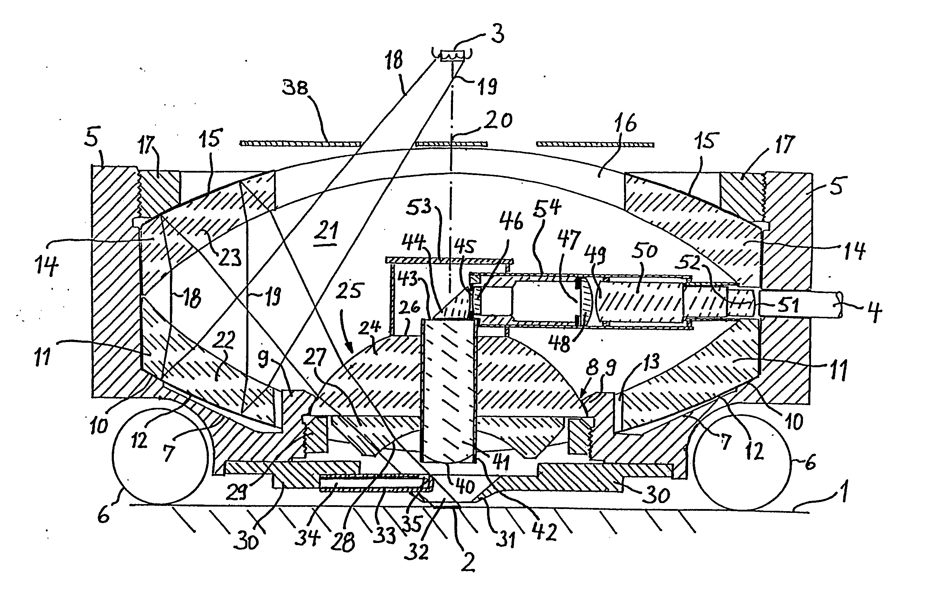

Nachfolgend wird ein Ausführungsbeispiel der Erfindung anhand der Zeichnung näher erörtert, die in einer einzigen Figur einen Schnitt durch den Meßkopf zeigt.

Der in der Zeichnung dargestellte Meßkopf dient dazu, auf einer Meßebene 1 nacheinander einzelne Meßflächen 2 optisch abzutasten, die beim Bedrucken von Druckbögen als Farbmeßfelder mitgedruckt worden sind und deren Farbe zur farbmetrischen Überwachung und Steuerung einer Druckmaschine sehr genau erfaßt werden soll. Der in der Zeichnung dargestellte Meßkopf bildet eine schematisch dargestellte Lichtquelle 3 auf die Meßfläche 2 etwas verkleinert ab und speist einen Teil des remittierten Lichtes in einen Lichtwellenleiter 4 ein, der mit einem Spektrometer verbunden ist, durch das die spektrale Farbanalyse durchgeführt wird.

Der Meßkopf verfügt über eine ringförmige Fassung 5 mit einem Außendurchmesser von etwa 80 mm. Die Fassung 5 ist mit mehreren Laufrollen 6 versehen, die den Abstand zur Meßebene 1 konstant halten. Eine am Meßkopf befestigte in der Zeichnung nicht dargestellte Feder dient zum Niederdrücken des auf der Meßebene 1 liegenden Druckbogens. Die Ausmessung der mitgedruckten Farbmeßfelder muß in solcher Exaktheit erfolgen, daß auch bei Abstandsänderungen von beispielsweise ± 0,2 mm in Bezug auf den Meßkopf (ungleichmäßige Auflage) eine Verfälschung der erfaßten Meßwerte von weniger als 1 Promille über den gesamten Wellenlängenbereich gewährleistet ist. Diese Forderung ergibt sich daraus, daß eine Farbortbestimmung mit einer Genauigkeit von 0,1 E ermöglicht werden soll, was der Grenze der Farbauflösung für ein geübtes Auge entspricht.

Die Abbildung der Lichtquelle 3 erfolgt in der weiter unten näher beschriebenen Weise extrem achromatisch um sicherzustellen, daß die Abbildung der weißen Lichtquelle 3 für alle Spektralfarben in die gleiche Ebene erfolgt und nicht in mehreren parallel verschobenen Ebenen für die verschiedenen Spektralfarben.

Die Fassung 5 befindet sich mit der Lichtquelle 3 in einem gemeinsamen Gehäuse, wobei der Lichtquelle 3 zur Vermeidung von Abbildungsfehlern kein Reflexionsspiegel zugeordnet ist. Die Lichtquelle 3 besteht aus einer Flachwendel-Halogenlampe mit einer Farbtemperatur von 3000 Grad. Die Flachwendel überdeckt eine rechteckförmige Fläche mit einer Länge von 2,6 mm und einer Breite von 1,3 mm. Die Leistungsaufnahme der Flachwendel-Halogenlampe beträgt bei dem bevorzugten Ausführungsbeispiel 30 Watt. Die Ebene der Flachwendel erstreckt sich parallel zur Meßebene 1, was in der Zeichnung schematisch dargestellt ist.

Die ringförmige Fassung 5 des Meßkopfes verfügt über einen trichterförmigen Boden 7 mit einer eine kreisförmige Öffnung 8 umgebenen ringförmigen Nase 9 und einer ringförmig umlaufenden Schulter 10 im Bereich des größten Durchmessers des trichterförmigen Bodens 7.

Die umlaufende Schulter 10 dient zur Abstützung eines ringförmigen ersten Mangin-Spiegels 11, dessen Spiegelfläche 12 sich auf der konvexen Seite des Mangin-Spiegels 11 befindet. Wie man in der Zeichnung erkennt, weist der ringförmige Mangin-Spiegel 11 eine kreisförmige zentrale Öffnung 13 auf, in die die umlaufende Nase 9 der ringförmigen Fassung 5 von unten hineinragt.

Dem ersten Mangin-Spiegel 11, der mit seiner konkaven Seite nach oben weist, ist ein zweiter Mangin-Spiegel 14 zugeordnet, der mit seiner konkaven Seite nach unten weist und dessen Spiegelfläche 15 auf der nach oben weisenden konvexen Seite aufgebracht ist. Der zweite Mangin-Spiegel 14 verfügt wie der erste Mangin-Spiegel 11 über eine kreisförmige zentrale Öffnung 16. Bei einem Außendurchmesser von 69 mm haben die kreisförmigen Öffnungen 13 und 16 einen Durchmesser von 39 mm. In der Nähe ihres oberen Randes ist in der ringförmigen Fassung 5 ein Innengewinde vorgesehen, in das ein Klemmring 17 zum Befestigen der Mangin-Spiegel 11, 14 in die Fassung 5 eingeschraubt ist.

Zur Erläuterung des (rotationssymmetrischen) Strahlenganges sind in der Zeichnung die durch eine Blende 38 definierten Randstrahlen 18 und 19 eines von der Lichtquelle 3 ausgehenden Strahlenbündels dargestellt, die auf der optischen Achse 20 der Mangin-Spiegel 11, 14 oberhalb des zweiten Mangin-Spiegels 14 angeordnet ist. Den links eingezeichneten Randstrahlen 18 und 19 entsprechen aufgrund der Rotationssymmetrie der gesamten Anordnung auch Randstrahlen auf der rechten Seite, die jedoch der Übersichtlichkeit wegen nicht eingezeichnet sind.

Das durch die Randstrahlen 18, 19 veranschaulichte Lichtbündel der Lichtquelle 3 gelangt durch die Öffnung, 16 im zweiten Mangin-Spiegel 14 in den Hohlraum 21 zwischen den identisch aufgebauten Mangin-Spiegeln 11, 14 und wird beim Eintritt in den Glaskörper 22 des ersten Mangin-Spiegels 11 gebrochen. Nach der Reflexion an der Spiegelfläche 12 tritt das Lichtbündel nach einer nochmaligen Brechung aus dem Glaskörper 22 in der Weise aus, daß der gebrochene und gespiegelte, in der Zeichnung nicht dargestellte Mittelstrahl zwischen den Randstrahlen 18, 19 parallel zur optischen Achse 20 des Meßkopfes verläuft. Dies läßt sich durch Justieren des Abstandes der Lichtquelle 3 von der Symmetrieebene zwischen den beiden Mangin-Spiegeln 11, 14 erreichen.

Wie man aus der Zeichnung erkennt, ist der Krümmungsradius der verspiegelten Flächen 12, 15 größer (etwa 71 mm) als der Krümmungsradius der konkaven Innenseiten (etwa 49 mm). Nach der Reflexion an der Spiegelfläche 15 gelangen die aus dem Glaskörper 23 des Mangin-Spiegels 14 austretenden Lichtstrahlen, insbesondere die Randstrahlen 18, 19, in den ersten Linsenkörper 24 eines Aplanaten 25. Der erste Linsenkörper 24 des Aplanaten 25 hat eine kalottenförmige Gestalt, wobei die in Richtung auf die Lichtquelle 3 weisende konvexe sphärische Fläche mit einer Abflachung 26 versehen ist.

Dem ersten Linsenkörper 24 des Aplanaten 25 ist ein zweiter Linsenkörper 27 zugeordnet, der die in der Zeichnung dargestellte äußere Form eines Kegelstumpfes mit einer konkaven sphärischen Austrittsfläche 28 hat. Der Aplanat 25 besteht in üblicher Weise aus zwei verschiedenen Gläsern, wobei der Außenradius des ersten Linsenkörpers bei einem Ausführungsbeispiel etwa 17 mm und der Innenradius des zweiten Linsenkörpers 27 etwa 12 mm beträgt. Der Aplanat ist so bemessen und auf die selbst aplanatische Mangin-Spiegel-Anordnung abgestimmt, daß er die Farbfehler der letztern kompensiert, die Anordnung also als Ganzes achromatisch ist, und zwar über den gesamten interessierenden Wellenlängenbereich.

Der aus den Linsenkörpern 24, 27 bestehende Aplanat 25 ist von unten mit Hilfe eines Gewinderinges 29 gegen die umlaufende Nase 9 festgeklemmt. Nach dem Durchqueren des Aplanaten 25 treffen die Lichtstrahlen des durch die Randstrahlen 18, 19 begrenzten Ring-Lichtbündels unter einem Einfallswinkel von 45° ± 5° auf die Meßebene 1 auf. In der Zeichnung ist nur der linke Schnitt durch das Ring-Lichtbündel dargestellt, jedoch sind entsprechende Lichtstrahlen vorhanden, die von allen Seiten schräg einfallen und die Meßfläche 2 auf der Meßebene 1 beaufschlagen. Die Meßfläche 2 hat wie die etwas verkleinert abgebildete Lichtquelle 3 eine rechteckförmige Gestalt, wobei die Meßfläche 2 einen chromatisch korrigierten Lichtfleck oder Meßfleck bildet.

Wie man in der Zeichnung erkennt, ist die Öffnung 8 der Fassung 5 mit einer Abdeckung 30 versehen, die in ihrer Mitte eine trichterförmige Streulichtblende 31 aufweist. Die Öffnung 32 der Streulichtblende 31 hat einen Innendurchmesser von beispielsweise 5 mm und endet mit ihrem unteren Rand etwa 0,5 mm oberhalb der Meßebene 1.

In der Zeichnung erkennt man weiterhin, daß an der Abdeckung 30 ein Führungskanal 33 für einen Referenzlichtwellenleiter 34 vorgesehen ist, der es gestattet, das in eine Referenzfläche 35 einfallende Licht zum Bilden einer Referenzintensität auszukoppeln, die bei Leistungsänderungen der Lichtquelle 3 eine Korrektur der Meßwerte infolge einer geänderten Beleuchtungsstärke gestattet. Der Referenzlichtwellenleiter 34 ragt radial von außen in den Bereich des Lichtbündels 18, 19 hinein und ist an seinem vorderen Ende abgeschrägt, so daß von oben einfallendes Licht in die Längsrichtung des Leiters 34 umgelenkt wird.

Die oben beschriebene Anordnung mit den beiden symmetrisch ausgebildeten Mangin-Spiegeln 11, 14 und dem Aplanaten 25 gestattet es, auf der Meßebene 1 ein chromatisch korrigiertes Bild der Lichtquelle 3 zu erzeugen, so daß bei Abstandsänderungen infolge einer ungleichmäßigen Auflage des Druckbogens auf seiner Unterlage keine chromatische Verschiebung des von der Meßfläche gestreuten Lichtes auftritt, was der Fall wäre, wenn die Abbildung der Lichtquelle 3 aus mehreren übereinanderliegenden Bildern mit verschiedenen Spektralfarben bestünde.

Der beschriebenen chromatisch korrigierten Beleuchtungsoptik ist die nachfolgend erörterte Meßoptik zugeordnet, die gegenüber Abstandsänderungen zwischen dem Meßkopf und der Meßebene unempfindlich ist. Die Meßoptik verfügt über eine Eintrittslinse 40, die als sphärische Fläche eines Glasstabes 41 ausgebildet ist. Der Glasstab 41 befindet sich in einer lichtundurchlässigen Hülse 42, die sich entlang der optischen Achse des Meßkopfes durch den Achromaten 25 erstreckt. Der Glasstab 41 hat eine Länge von etwa 15 mm. Seine Eintrittslinse 40 mit einem Radius von etwa 7 mm befindet sich in einem Abstand von etwa 5 mm oberhalb der Meßebene 1.

Am hinteren Ende 43 ist der Glasstab 41 mit einem Umlenkprisma 44 gekoppelt, das sich in einer Umlenkkammer 53 befindet und durch das das vom Meßfleck remittierte Licht in die Symmetrieebene zwischen den beiden Mangin-Spiegeln 11, 14 umgelenkt wird. Das Umlenkprisma 44 verfügt auf der in der Zeichnung rechts dargestellten Seite über eine sphärische Fläche, gegen die eine Meßblende 45 anliegt. Die Meßblende 45 liegt dabei im Brennpunkt der Eintrittslinse 40, so daß die Linse 40 den Abstand der Meßblende 45 ins Unendliche transformiert. Dadurch wird das System auf die genannten unvermeidbaren Abstandsänderungen unempfindlich. Die Meßblende 45 hat einen Innendurchmesser von beispielsweise 2,2 mm. Wie man in der Zeichnung erkennt, mündet ein mehrere optische Komponenten enthaltendes Lichtschutzrohr 54 in die auf der Rückseite des Aplanaten 25 angeordnete Umlenkkammer 53 ein. Das Lichtschutzrohr 54 erstreckt sich in radialer Richtung entlang der Symmetrieebene zwischen den beiden Mangin-Spiegeln 11 und 12 bis zu deren Berandung.

Um zu verhindern, daß Streulicht von außerhalb der Meßfläche 2 erfaßt wird, wird mit Hilfe einer Linse 46 (und der Flächen 40 und 45) die Meßfläche 2 auf eine Streulichtblende 47 mit einem freien Durchmesser von 4,5 mm abgebildet, die sich in einem Abstand von etwa 11 mm von der Linse 46 befindet.

Aufgrund der feinen Rasterstruktur der Meßfelder kann es bei faseroptischen Lichtwellenleitern mit einer Vielzahl von Fasern zu einem Moirée-Effekt kommen. Um diesen zu vermeiden, ist eine Anordnung mit zwei weiteren Linsen 48, 49 vorgesehen. Die Linse 48 ist wie die Linse 46 plankonvex. Die Linse 49 wird durch eine sphärische Fläche an der in der Zeichnung linken Seite eines Übergangsglasstabes 50 gebildet. Der Übergangsglasstab 50 dient einerseits zur Wegverlängerung und andererseits zur Anpassung des Durchmessers des Lichtwellenleiters 4. Der Übergangsglasstab 50 hat einen Durchmesser, der sich in zwei Stufen zum Lichtwellenleiter 4 hin reduziert. Die Linsen 48, 49 bilden die Meßblende 45 auf die in der Zeichnung rechts liegende Stirnfläche 51 des Übergangsglasstabes 50 ab. An der Stirnfläche 51 ist eine Linse 52 vorgesehen, die das zum Lichtwellenleiter 4 ausgekoppelte Licht parallelisiert. Obwohl der Öffnungswinkel des Lichtwellenleiters 4 beispielsweise ± 11° beträgt, wird der Lichtwellenleiter 4 nur mit einem Öffnungswinkel von 9° eingesetzt, um eine höhere Gewähr dafür zu bieten, daß beim Biegen des Lichtwellenleiters 4 keine Änderung der Lichtintensität verursacht wird. Die Länge des Übergangsglasstabes 50 beträgt etwa 18 mm.

**Patentansprüche**

1. Meßkopf für ein photoelektrisches Meßgerät, insbesondere ein spektrales Remissionsmeßgerät, mit einer Lichtquelle (3), mit einer Beleuchtungsoptik (11, 14, 25), die bei einem vorgegebenen Abstand eine auf einer Meßebene (1) liegende Meßfläche (2) unter einem vorgegebenen großen Einfallswinkel anstrahlt, mit einer Meßoptik (40, 41, 44—51), deren Objektiv (40) das von der Meßfläche (2) unter einem kleinen Meßwinkelbereich um das Lot auf die Meßfläche (2) zurückgestrahlte Meßlicht auffängt und über einen Lichtwellenleiter (4) an eine photoelektrische Wandleranordnung, insbesondere ein Spektrometer angekoppelt ist, dadurch gekennzeichnet, daß die Lichtquelle (3) auf der optischen Achse (20) einer Anordnung aus zwei parallel zur Meßebene (1) ausgerichteten ringförmigen Mangin-Spiegeln (11, 14) angeordnet ist, die mit ihren konkaven Seiten zueinanderweisen und die im Abstand von den Mangin-Spiegeln (11, 14) angeordnete Lichtquelle (3) durch einen koaxialen, die Farbfehler der Mangin-Spiegel kompensierenden Aplanaten (25) hindurch auf die Meßfläche (2) abbilden, daß die Eintrittslinse (40) des Objektives (41) auf der optischen Achse (20) der Mangin-Spiegel (11, 14) angeordnet ist und daß sich im Brennpunkt der Eintrittslinse (40) des Objektives eine Meßblende (45) befindet, an die der Lichtwellenleiter (4) angekoppelt ist.

2. Meßkopf nach Anspruch 1, dadurch gekennzeichnet, daß der Aplanat (25) sich bis in den Zwischenraum zwischen den beiden Mangin-Spiegeln (11, 14) hinein erstreckt und entlang seiner optischen Achse eine Durchgangsöffnung aufweist, in die ein gegenüber dem Aplanaten (25) optisch entkoppelter Glasstab (41) hineinreicht, der an dem zur Meßfläche weisenden vorderen Ende eine sphärische Lichteintrittsfläche (40) und an seinem hinteren Ende die Meßblende (45) aufweist.

3. Meßkopf nach Anspruch 2, dadurch gekennzeichnet, daß die Meßblende (45) über ein Umlenkprisma (44) mit dem hinteren Ende (43) des Glasstabes (41) gekoppelt ist.

4. Meßkopf nach Anspruch 2 oder 3, dadurch gekennzeichnet, daß der Meßblende (45) eine Linsenanordnung zugeordnet ist, die die Meßfläche (2) in eine Streulichtblende (47) abbildet.

5. Meßkopf nach Anspruch 4, dadurch gekennzeichnet, daß im Strahlengang hinter der Streulichtblende (47) eine Linsenanordnung (48, 49) vorgesehen ist, die die Meßblende (45) auf die Stirnfläche (51) am Ausgang des Meßkopfes zum Lichtwellenleiter (4) abbildet.

6. Meßkopf nach Anspruch 5, dadurch gekennzeichnet, daß die Linsenanordnung (49) am zur Streulichtblende (47) weisenden vorderen Ende eines Übergangsglasstabes (50) und die Stirnfläche (51) als Koppelfläche am hinteren Ende des Übergangsglasstabes (50) vorgesehen ist.

7. Meßkopf nach Anspruch 7 dadurch gekennzeichnet, daß die Stirnfläche des Lichtwellenleiters (4) mit dem hinteren Ende (51) des Übergangsglasstabes (50) gekoppelt ist.

8. Meßkopf nach einem der Ansprüche 3 bis 7, dadurch gekennzeichnet, daß die Meßblende (45), die Streulichtblende (47) und der Übergangsglasstab (50) mit den jeweils zugeordneten Linsen (46, 47) in einem Lichtschutzrohr (54) angeordnet sind, das sich in radialer Richtung entlang der Symmetrieebene zwischen den beiden Mangin-Spiegeln (11, 14) bis zu deren Berandung erstreckt.

9. Meßkopf nach Anspruch 8, dadurch gekennzeichnet, daß das Lichtschutzrohr (54) in der Nähe der optischen Achse der Mangin-Spiegel (11, 14) in eine Umlenkkammer (53) mündet, die durch die abgeflachte Rückseite (26) des Aplanaten (25) abgestützt ist und in die der Glasstab (41) mit dem Umlenkprisma (44) hineinragt.

10. Meßkopf nach einem der vorstehenden Ansprüche, dadurch gekennzeichnet, daß ein Referenzlichtwellenleiter (34) vorgesehen ist, dessen vorderes Ende (35) in das aus dem Aplanaten (25) austretende Lichtbündel hineinragt.

**Revendications**

1. Tête de mesure destinée à un appareil de mesure photoélectrique, notamment d'un appareil de mesure de réflexion spectrale, comportant une source lumineuse (3), une optique d'éclairage (11, 14, 25) qui éclaire sous un grand angle d'incidence prédéterminé, à une distance prédéterminée, une surface (2) de mesure située sur un plan (1) de mesure ainsi qu'une optique de mesure (40, 41, 44—51), dont l'objectif (40) capte la lumière à mesurer, réfléchie dans un petit secteur angulaire de mesure autour de la verticale, à la surface (2) de mesure et qui est couplée au moyen d'un guide (4) d'ondes lumineuses à un dispositif convertisseur photoélectrique, notamment un spectromètre, tête caractérisée en ce que la source lumineuse (3) est située sur l'axe optique (20) d'un agencement de deux miroirs Mangin (11, 14), de forme annulaire, alignés parallèlement au plan (1) de mesure, dont les faces concaves sont en regard l'une de l'autre et qui, au moyen d'un aplanat (25) coaxial, qui compense les aberrations chromatiques des miroirs Mangin, forment sur la surface (2) de mesure l'image de la source lumineuse disposée à quelque distance des miroirs Mangin (11, 14), en ce que la lentille (40) d'entrée de l'objectif (41) est disposée sur l'axe optique des miroirs Mangin (11, 14) et en ce que se trouve, au foyer de la lentille (40) d'entrée de l'objectif, un diaphragme (45) de mesure, avec lequel est couplé le guide (4) d'ondes lumineuses.

2. Tête de mesure selon la revendication 1, caractérisée en ce que l'aplanat (25) s'étend dans l'intervalle enre les deux miroirs Mangin (11, 14) et présente, le long de son axe optique une ouverture de passage, dans laquelle est engagée une barre (41) en verre, découplée optiquement par rapport à l'aplanat (25), qui présente à son extrémité avant, en regard de la surface de mesure, une surface (40) sphérique d'entrée de lumière et, à son extrémité arrière, le diaphragme (45) de mesure.

3. Tête de mesure selon la revendication 2, caractérisée en ce que le diaphragme (45) de mesure est couplé, par l'intermédiaire d'un prisme (44) de déviation, avec l'extrémité arrière (43) de la barre (41) en verre.

4. Tête de mesure selon la revendication 2 ou 3, caractérisée en ce qu'il est adjoint au diaphragme (45) de mesure, un agencement de lentilles qui forme l'image de la surface (2) de mesure sur un diaphragme (42) de retenue de lumière diffusée ou parasite.

5. Tête de mesure selon la revendication 4, caractérisée en ce qu'il est prévu, sur le parcours des rayons, derrière le diaphragme (47) de lumière diffusée, un agencement de lentilles (48, 49) qui forme l'image du diaphragme (45) de mesure sur la face frontale (51) à la sortie de la tête de mesure vers le guide (4) d'ondes lumineuses.

6. Tête de mesure selon la revendication 5, caractérisée en ce que sont prévus l'agencement (49) de lentille sur l'extrémité avant (dirigée vers le diaphragme (47)) d'une barre (50) de transition en verre et la face frontale (51) comme surface de couplage à l'extrémité arrière de la barre (50) de transition en verre.

7. Tête de mesure selon la revendication 7, caractérisée en ce que la face frontale du guide (4) d'ondes lumineuses est couplée avec l'extrémité arrière (51) de la barre (50) de transition en verre.

8. Tête de mesure selon l'une des revendications 3 à 7, caractérisée en ce que le diaphragme (45) de mesure, le diaphragme (47) de lumière diffuse, et la barre (50) de transition en verre sont disposés avec les lentilles (46, 47) respectivement adjointes dans un tube (54) de protection de la lumière qui s'étend en direction radiale le long du plan de symétrie entre les deux miroirs Mangin (11, 14) jusqu'à un bord de ces miroirs.

9. Tête de mesure selon la revendication 8, caractérisée en ce que le tube (54) de protection de la lumière débouche à proximité de l'axe optique des miroirs Mangin (11, 14) dans une chambre (53) de déviation qui est étagée par la face arrière (26) aplatie de l'aplanat (25) et dans laquelle fait saillie la barre (41) de verre avec le prisme (44) de déviation.

10. Tête de mesure selon l'une des revendications qui précèdent, caractérisée en ce qu'il est prévu un guide (34) d'ondes lumineuses de référence dont l'extrémité avant (35) fait saillie dans le faisceau lumineux sortant de l'aplanat (25).

**Claims**

1. Measuring head for a photoelectric measuring device, especially a spectral reflectance measuring instrument, comprising a source of light (3), optical illumination means (11, 14, 25) which illuminate, from a predetermined distance, a measuring area (2) in a measuring plane (1), with a predetermined large angle of incidence, and optical measuring means (40, 41, 44—51) the objective lens (40) of which captures the measuring light reflected from the measuring area (2) within a small measuring angle range about a perpendicular of the measuring area (2) and is connected by means of a light waveguide (4) to a photoelectric transducer layout, especially a spectrometer, wherein the light source (3) is located on the optical axis (20) of an arrangement of two annular Mangin mirrors (11, 14) which are aligned parallel to the measuring plane (1) and the concave sides of which face one another, which mirrors image the light source (3), which is located at a distance from the Mangin mirrors (11, 14), on the measuring area (2) through a coaxial aplanatic lens (25) which compensates for colour errors of the Mangin mirrors, wherein the inlet lens (40) of the objective lens (41) is located on the optical axis (20) of the Mangin mirrors (11, 14), and wherein a measuring diaphragm (45) is located at the focal point of said inlet lens (40) of the objective lens, to which measuring diaphragm (45) the light waveguide (4) is connected.

2. Measuring head according to claim 1, wherein the aplanatic lens (25) extends into the intermediate space between the two Mangin mirrors (11, 14) and comprises a passage opening along its optical axis into which a glass rod (41) optically disconnected relative to the aplanatic lens (25) protrudes, said glass rod (41) having a spherical light inlet surface (40) at its front end facing the measuring area, and the measuring diaphragm (45) at its rear end.

3. Measuring head according to claim 2, wherein the measuring diaphragm (45) is connected by a deflecting prism (44) with the rear end (43) of the glass rod (41).

4. Measuring head according to claim 2 or 3, wherein the measuring diaphragm (45) is associated with a lens arrangement which images the measuring area (2) into a light-dispersion diaphragm (47).

5. Measuring head according to claim 4, wherein a lens assembly (48, 49) is provided in the ray path behind the light-dispersion diaphragm (47), said lens assembly imaging the measuring diaphragm (45) on the frontal surface (51) at an outlet of the measuring head toward the light waveguide (4).

6. Measuring head according to claim 5, wherein the lens assembly (49) is located at a front end, facing the light-dispersion diaphragm (47), of a transition glass rod (50), and the frontal surface (51) is provided as a coupling surface at the rear end of the transition glass rod (50).

7. Measuring head according to claim 7, wherein a frontal surface of the light waveguide (4) is connected with the rear end (51) of the transition glass rod (50).

8. Measuring head according to any one of claims 3 to 7, wherein the measuring diaphragm (45), the light-dispersion diaphragm (47) and the transition glass rod (50) with their associated lenses (46, 47) are located in a light protection tube (54) extending in a radial direction along the plane of symmetry between the two Mangin mirrors (11, 14) to the edges thereof.

9. Measuring head according to claim 8, wherein the light protection tube (54) opens in the vicinity of the optical axis of the Mangin mirrors (11, 14) into a deflection chamber (53) which is supported by a flattened rear side (26) of the aplanatic lens (25) and into which the glass rod (41) projects with the deflecting prism (44).

10. Measuring head according to any one of the preceding claims, wherein a reference light waveguide (34) is provided, a front end (35) of which protrudes into the light beam exiting from the aplanatic lens (25).